(19) Europäisches Patentamt
European Patent Office
Office européen des brevets

(11) **EP 3 964 800 B1**

(12) **EUROPEAN PATENT SPECIFICATION**

(45) Date of publication and mention of the grant of the patent:
**04.12.2024 Bulletin 2024/49**

(21) Application number: **20194083.0**

(22) Date of filing: **02.09.2020**

(51) International Patent Classification (IPC):
*G01D 5/14* (2006.01)    *G01B 1/00* (2006.01)
*G01B 7/00* (2006.01)    *G02B 7/02* (2021.01)
*G02B 27/64* (2006.01)

(52) Cooperative Patent Classification (CPC):
**G01D 5/145;** G02B 7/02; G02B 27/646

(54) **TRIAXIAL POSITION SENSING FOR CAMERA SYSTEMS USING HALL SENSORS**

DREIACHSIGE POSITIONSERFASSUNG FÜR KAMERASYSTEME UNTER VERWENDUNG VON HALL-SENSOREN

DÉTECTION DE POSITION TRIAXIALE POUR SYSTÈMES DE CAMÉRA UTILISANT DES CAPTEURS À EFFET HALL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.03.2022 Bulletin 2022/10**

(73) Proprietor: **Shenzhen Goodix Technology Co., Ltd.**
**Shenzhen (CN)**

(72) Inventors:
• **PHAN LE, Kim**
 **6537 TL Nijmegen (NL)**
• **LI, Min**
 **3000 Leuven (BE)**

(74) Representative: **Nederlandsch Octrooibureau**
**P.O. Box 29720**
**2502 LS The Hague (NL)**

(56) References cited:
DE-A1- 102016 108 846    JP-B2- 6 513 903
US-A1- 2015 015 729    US-A1- 2015 195 439
US-B2- 9 523 744

## Description

## Field of the invention

The present invention relates to a Hall sensor IC for a camera system configured to determine a triaxial position of a lens module using Hall sensors, to a camera system comprising the Hall sensor IC, and to a method for determining a triaxial position of a lens module using the Hall sensor IC.

## Background art

Smartphones have become an indispensable part of life in nowadays' society. In the past years they have evolved to an extent in which they have become powerful devices with which we can perform almost any task. Smartphones have allowed to merge into one single device the functions which in the past were performed by different devices. A central feature of a smartphone nowadays is the camera. Smartphone cameras are becoming more and more compact while quality and resolution are improved throughout the recent generations. Also compact camera devices are evolving and their quality and resolution has been improving while their size has been reduced. While AutoFocus (AF) is a must-have feature of most smartphone cameras, Optical Image Stabilization (OIS) is becoming more and more popular in many flagship models. For AF, the lens barrel needs to translate in the optical axis (Z-axis), while for OIS, it jiggles in X and Y directions which are in the plane perpendicular to the optical axis. Movement in all dimensions should be with an accuracy of micrometers. The triaxial (X-Y-Z) movements are driven by three separate motors. Some popular motor technologies used for AF and OIS are Voice Coil Motor (VCM) or Shape Memory Alloy (SMA). Usually, the position of the lens in one direction can be accurately measured by Hall sensors to feedback to the control loop of the camera system. These Hall sensors consist of a magnet, usually mounted on the moving part (the lens barrel), and an Integrated Circuit (IC) containing a Hall sensor mounted on the fixed part (e.g. the module base or housing). When the distance between the magnet and the Hall sensor changes in the direction of actuation (e.g. in the Z-axis for AF), the Hall sensor measures the changing magnetic field which can be converted into the position of the lens.

However, there are technical challenges associated with packing the motors, the position sensors (including magnets), and the driving circuitry inside the miniaturized lens module.

In some older and/or low-cost AF designs, there are no position sensors. Instead, the control loop uses image contrast as an indication of sharpness and an algorithm tries to scan the focal length until the sharpness is maximized. This method of AF does not require additional components in the camera system, but it is generally slow.

More modern or higher-priced designs include position sensors (Hall sensors) to assist the control loop of the camera system. There is usually one Hall sensor IC (comprising one Hall sensor) for each axis. In some designs, there is only one Hall sensor IC to measure the lens position in the Z-axis, and there are no position sensors for X and Y to reduce cost and complexity. In this situation, the OIS is controlled by a feed forward mechanism, which may lead to some reduction in stabilization quality.

In some high-end AF/OIS designs, there can be two or three separated pairs of Hall sensors and magnets. The Hall sensors usually reside each in separated silicon chips mounted on the side walls or the base of the camera module (system). For example, US 2015/0015729 A1 discloses a position detection apparatus that includes an AF mechanism (an AF position sensor) and an OIS mechanism (an OIS position sensor) by using a closed loop control, in which a magnet is commonly used as an autofocus magnet and an optical image stabilization magnet to achieve downsizing. The position detection apparatus includes the autofocus mechanism that moves a lens along an optical axis (Z axis) of the lens, and the optical image stabilization mechanism that moves the lens in an in-plane direction orthogonal to the optical axis. A permanent magnet is secured to the lens, and moves according to the movement of the lens. The amount of movement thereof is detected by position sensors.

JP 6513903 B2 discloses a camera module and a position control method of optical elements of the module by using electrification to a magnetic sensor or taking out a signal from the magnetic sensor. An AF module comprises: a lens which is movable in an optical axis direction a; a lens holder holding the lens; and an AF magnet 12 attached to the lens holder, and is movable with respect to an optical axis direction of the lens. A housing stores the AF module, and is movable in a vertical direction with respect to the optical axis direction of the lens. An OIS magnet 2 is attached to the housing. An AF magnetic sensor detects a position of the AF module. An OIS magnetic sensor detects a position of the housing. An electrification member is attached to the housing, and connected to an AF coil and/or the AF magnetic sensor.

US 2015/0195439 AI discloses an actuator module for optical image stabilization of a lens assembly relative to an image sensor in a camera, including a coil mounting structure. A plurality of OIS coils is mounted to the coil mounting structure. A plurality of magnets is affixed to the lens assembly structure. The plurality of OIS coils is mounted closer to the light input side than the plurality of magnets.

US 9 523 744 B2 discloses a sensing apparatus and sensing device using the sensing apparatus which are capable of identifying a relative position of a body which includes a magnetic module by using sensing data of a sensor unit which may be arranged in a 3 dimensional structure.

DE 10 2016 108 846 A1 discloses an angle sensor arrangement, comprising at least two sensor substrates which are arranged in such a way that they assume different angular positions with respect to an axis of rotation, at least one sensor substrate comprising two magnetic field sensor elements which are arranged in such a way that they assume different angular positions with respect to the axis of rotation, and comprising a combination device with the aid of which a linear combination of the magnetic field variables measured by the two magnetic field sensor elements can be determined. Furthermore, a method for calibrating or operating an angle sensor arrangement is specified.

WO 2019 159311 A1 discloses a DC motor control device, and more particularly a DC motor control device suitable for servo control that operates a DC motor that drives a driven body at a target speed and a target position.

US 2019/0162557 A1 discloses a device and method for the processing a measurement signal of a magnetic field. The device comprises a permanent magnet having two or four poles, an odd number of magnetic field sensors that are arranged in a plane below the magnets, and a signal processing unit, which is adapted to detect the values of the odd number of magnetic field sensors, to filter the fundamental frequency of the magnetic field out of the detected values of the lateral magnetic field sensors in order to calculate the value of the rotation angle from the fundamental frequency.

US 2019/0250222 A1 discloses a magnetic field sensor for sensing a direction of a magnetic field in an x-y plane which includes a first plurality of magnetic field sensing elements operable to generate a first plurality of magnetic field signals, the first plurality of magnetic field sensing elements having a respective first plurality of maximum response axes aligned in a respective first plurality of different directions in the x-y plane.

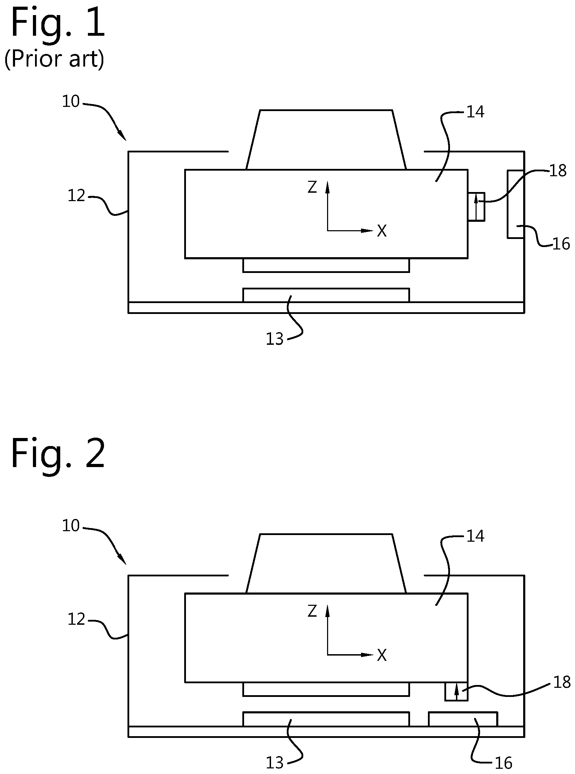

An example of a state-of-the-art camera system of a smartphone is shown in Fig.1, where the Hall sensor is used for linear position sensing in the Z-direction for AF operation. The lens barrel is hung on a system of springs and two stages of AF (moving in Z direction) and OIS (moving in X-Y directions). For simplicity, the springs, AF and OIS motors are not shown in Fig. 1. On a side of the lens barrel 14 there is a small magnet 18 used to create a magnetic field on the Hall sensor. The Hall sensor may be integrated in the lens driver IC or any IC 16 inside the camera module. The lens driver IC is mounted vertically (as viewed in the perspective of Fig. 1 following the Z direction) at a nearby sidewall of the housing. The magnetization of the magnet is in the Z-direction. It produces an (almost) linearly changing magnetic field around the location of the Hall sensor. When the lens barrel moves in the Z direction, the vertical magnetic field (Bx) on the Hall sensor changes linearly, which is used to calculate the lens position. In some other camera modules, X and Y position sensors can additionally be placed at different locations to assist the OIS operation. However, the design of separated Hall sensor chips makes the module highly complex and costly.

## Summary of the invention

According to claim 1, the invention provides Hall sensor integrated circuit, IC, for a camera system, the Hall sensor IC comprising at least three Hall sensors spaced apart from each other in a non-aligned configuration, and configured to measure a magnetic field generated based on a position of one magnet arranged in the camera system.

The invention provides a Hall sensor IC comprising at least three Hall sensors which can measure the magnetic field caused by one single magnet. The Hall sensor IC is a single die, a (small) block of semiconductor material on which a certain functional circuit is manufactured. A die is thus a block of semiconductor material containing one copy of the functional circuit. An IC or die can also be referred to as a chip. The Hall sensors used in the art usually reside in separate ICs, and one Hall sensor is used in combination with one magnet to detect position in one direction. If the position in an additional direction is to be determined, a separated magnet and Hall sensor (in a separated IC) are placed at a different location. The presence of these additional components requires additional space. By placing multiple Hall sensors in one single IC, space is saved, and their measurements of a magnetic field generated due to one single magnet can be combined to obtain a position of the magnet in more than one direction. More specifically, by placing the at least three Hall sensors spaced apart from each other in a non-aligned configuration, that is, a non-straight-line configuration or a configuration in which the at least three Hall sensors do not form a straight line, the position of the magnet in three dimensions can be determined. By having three known points (three known Hall sensors) and magnetic field values at these points from an external magnetic field source (magnet) to be determined, the position of the external magnetic field source in three dimensions (X-Y-Z) can be determined. Different techniques for performing this determination will be discussed later.

According to embodiments of the invention, the Hall sensor IC comprises a control unit configured to determine a three dimensional, 3D, position of the magnet based on a combination of the magnetic fields measured by the at least three Hall sensors.

According to embodiments of the invention, the at least three Hall sensors are each arranged within the Hall sensor IC forming a geometrical configuration with respect to each other with central symmetry or axial symmetry. According to embodiments, the at least three Hall sensors are equally spaced from each other. The specific distribution of the Hall sensors being equally spaced apart can provide more accurate measurements, because it allows to achieve a maximum distance between all the Hall sensors.

According to embodiments of the invention, the Hall sensor IC further comprises a memory configured to store information required to obtain the three dimensional position of the magnet based on the combination of the magnetic fields measured by the at least three Hall sensors.

According to embodiments of the invention, each of the at least three Hall sensors is configured to be individually enabled and disabled. This allows the Hall sensor IC to be adapted to different system requirements, and improves its versatility and compatibility.

According to embodiments of the invention, the Hall sensor IC comprises three Hall sensors arranged within the Hall sensor IC forming a circular configuration or triangular configuration. According to embodiments of the invention, the Hall sensor IC comprises four Hall sensors arranged within the Hall sensor IC forming a circular configuration or squared configuration. This redundancy of having (at least one) additional Hall sensor allows to improve accuracy of the measurements and thus robustness of the system. When the four Hall sensors are arranged in a circular configuration, the four Hall sensors can be arranged on the circumference of a circle. In some embodiments, the four Hall sensors are symmetrical around the center of the circle. The four hall sensors can be arranged in any quadrilateral configuration, for example, in a parallelogram configuration, in a trapezoidal configuration or in a squared configuration.

According to embodiments of the invention, the Hall sensor IC is configured to be integrated in another IC comprised in the camera system, the another IC being one of a list comprising but not limited to: a lens driver, a motor controller, an image sensor, an image sensor controller, an image processor, or any other IC present in the camera system.

Also according to claim 1, the invention provides a camera system comprising: a housing; a lens module arranged inside the housing; a Hall sensor IC as described in the previous paragraphs arranged inside the housing; and a magnet arranged inside the housing and facing the Hall sensor IC, wherein one of the Hall sensor IC and the magnet is arranged on a first inner side of the housing and the other one of the Hall sensor IC and the magnet is arranged on a first side of the lens module facing the first inner side of the housing. Preferably, the Hall sensor IC is arranged on the first inner side of the housing, and the magnet is mounted on the first side of the lens module.

The invention advantageously provides a camera system (camera module) design with a reduced size and complexity which allows for accurate three dimensional lens position determination. This is because, contrary to what is known in the art, the present invention requires only one magnet and one Hall sensor IC comprising at least three Hall sensors which measure a magnetic field generated based on the only one magnet, and this configuration allows to determine a position of the lens module in three directions X, Y and Z.

According to embodiments of the present invention, the first inner side of the housing corresponds to a side perpendicular to the optical axis of the camera system and opposite to a side with an opening in the housing through which the lens module moves. The Hall sensor IC may thus be placed at the base of the camera system, and the magnet may be thus placed on the edge of the lens module closest to the base of the camera system.

According to embodiments of the present invention, the first inner side of the housing corresponds to a side parallel to the optical axis of the camera system and adjacent to a side with an opening in the housing through which the lens module moves. The Hall sensor IC may thus be on a side wall of the camera system, and the magnet is thus placed on the edge of the lens module closest to that side wall of the camera system.

According to embodiments of the present invention, a distance between an edge of the magnet closest to the Hall sensor IC and the Hall sensor IC is not greater than 2 millimetres (mm), more preferably not greater than 1 mm, and more preferably not greater than 0.5 mm.

According to embodiments of the present invention, the at least three Hall sensors of the Hall sensor IC are all Hall sensors with horizontal Hall plates and the magnet is magnetized in a direction perpendicular to a plane of the Hall sensor IC. With this configuration, an orientation of the magnet and an orientation of the at least three Hall sensors of the Hall sensor IC are such that a gradient of a magnetic field component measured by the at least three Hall sensors is maximized and/or a linearity of the magnetic field component measured by the at least three Hall sensors is maximized.

According to a third aspect, the invention provides a method for determining a position of a lens module arranged inside a camera system, comprising: measuring, by each of the at least three Hall sensors of the Hall sensor IC as described in the previous paragraphs, a magnetic field generated based on a position of the magnet arranged inside the camera system, and combining the magnetic field measured by each of the at least three Hall sensors to determine a three dimensional, 3D, position of the magnet, wherein one of the Hall sensor IC and the magnet is arranged on a first inner side of a housing of the camera system, and the other one of the Hall sensor IC and the magnet is arranged on a first side of the lens module facing the first inner side of the housing.

According to claim 11, of the present invention, to determine the 3D position of the magnet, the method comprises comparing the combined measured magnetic field with predefined information stored in a look-up table.

According to embodiments of the present invention, to determine the 3D position of the magnet, the method comprises using predefined information stored in the form of at least one parametric function for transforming the magnetic fields measured by the at least three Hall sensors into the 3D position of the magnet.

With three known points receiving signals from a source to be determined, the three dimensional position of the source can be determined. Through simulations and/or measurements, the possible magnetic fields measured by the Hall sensors can be characterized for the different positions of the magnet in the directions X, Y and Z. One approach is to store in the memory of the Hall sensor IC or of another IC in communication with the Hall sensor IC a look-up table in which the values of the magnetic fields measured by the Hall sensors can be linked to the three dimensional (triaxial) position of the magnet. Another approach is to store the information in the form of parametric functions which have been previously determined by characterizing the magnetic field measurements for different positions. It should be evident that other approaches are available and known for the person skilled in the art.

## Brief description of the drawings

The present invention will be discussed in more detail below, with reference to the attached drawings, in which:

Fig. 1 schematically shows a design of a camera system according to the prior art.
Fig. 2 schematically shows a design of a camera system according to embodiments of the present invention.
Fig. 3 depicts a layout configuration of a Hall sensor IC for a camera system according to a first embodiment of the present invention.
Fig. 4 depicts another layout configuration of a Hall sensor IC for a camera system according to the first embodiment of the present invention.
Fig. 5 depicts another layout configuration of a Hall sensor IC for a camera system according to the first embodiment of the present invention.
Fig. 6 shows a representation of a magnetic field in the Z direction on the X-Y plane where a Hall sensor IC is located, for a specific distance between a magnet and the Hall sensor IC, according to an example of a first embodiment of the present invention.
Fig. 7 shows a profile of a magnetic field in the Z direction for different distances, according to an example of the first embodiment of the present invention.
Fig. 8 shows a common-mode signal at different Z positions and over X-Y displacement of a magnet, according to an example of the first embodiment of the present invention, (a) and (b) showing different perspectives.
Fig. 9 shows graphs of the values of the Z component of the magnetic field showing values measured by four sensors, according to an example of the first embodiment of the present invention, (a) and (b) showing different perspectives.
Fig. 10 depicts a layout configuration of a Hall sensor IC for a camera system according to a second embodiment of the present invention.
Fig. 11 depicts a layout configuration of a Hall sensor IC for a camera system according to a third embodiment of the present invention.

The figures are meant for illustrative purposes only, and do not serve as restriction of the scope or the protection as laid down by the claims.

## Description of embodiments

Fig. 2 schematically shows a design of a camera system according to embodiments of the present invention.

In embodiments of the present invention, a camera system is proposed that features both AF and OIS, with 3D lens position sensing using one single magnet and one single Hall sensor IC containing a plurality of integrated Hall sensors. In this way, the system is less complex, low cost and compact while precise lens position control can still be maintained.

According to a first embodiment, a configuration of a camera system 10 is proposed, comprising a housing 12, an image sensor 13, a lens module or lens barrel 14, a Hall sensor IC 16 and a single magnet 18. With this camera system, a lens position in all X, Y, and Z axes (the X and Z axes are depicted in the figure, and the Y axis extends in the direction perpendicular to the X and the Z axes) can be determined. The Hall sensor IC 16 may be mounted on a first inner side of the housing, such as on the bottom plate of the camera system, e.g., a base of the camera system, e.g., a side perpendicular to the optical axis of the camera system and opposite to a side of the housing with an opening through which the lens barrel moves. The Hall sensor IC may however also be mounted on a side wall of the camera system, a side parallel to the optical axis, or in any other suitable position, provided that the magnet is in the vicinity or close proximity of the Hall sensor IC, and that the Hall sensor IC and the magnet have appropriate relative orientations.

The Hall sensor IC may be mounted on a Printed Circuit Board (PCB) arranged on the bottom of the camera system. The Hall sensor IC may be integrated into another IC comprised in the camera system, a larger IC, such as a lens driver IC, a memory, a motor driver, a digital signal processor (DSP), a digital block for sensing and control algorithms, an image sensor 13, an image sensor controller, an image processor, or other ICs present in the camera system. In the first embodiment, the magnet 18 may be mounted at the edge of the lens module 14 closest to the Hall sensor IC, such as the lowest edge of the lens module. If the Hall sensor IC 16 is placed on one inner wall of the housing 12, the magnet 18 should be placed on one wall of the lens module 14 facing the inner wall of the housing where the Hall sensor IC is placed. It should be noted that also the magnet 18 can be placed on one inner wall of the housing 12, and in such case the Hall sensor IC 16 should be placed on one wall of the lens module 14 facing the one wall where the magnet is located.

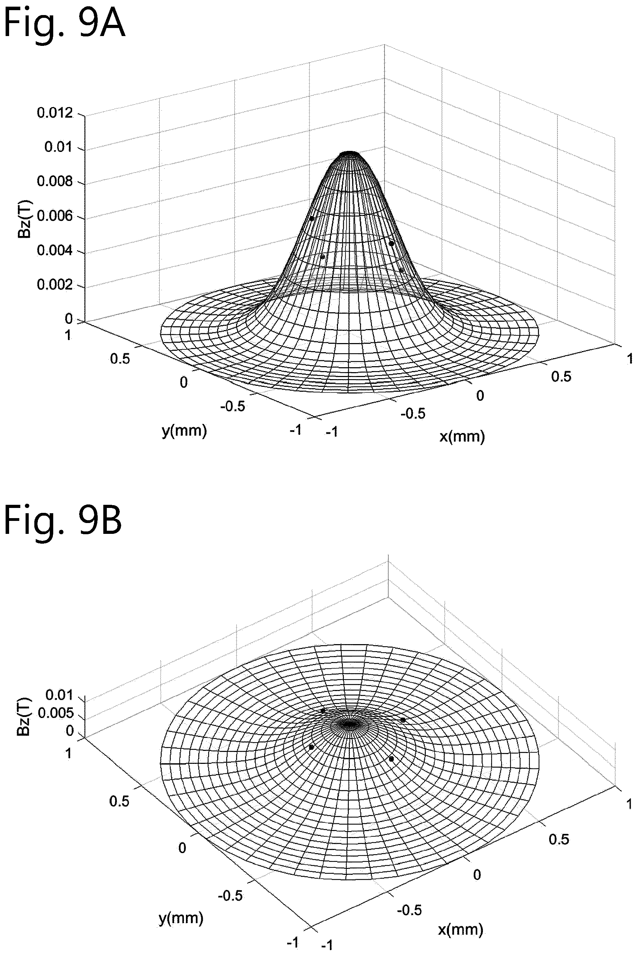

The magnetization of the magnet 18 shown in Fig. 2 is in the Z direction and the Hall sensor IC 16 is located along the X-Y plane and comprises Hall sensor with horizontal Hall plates. This is however not limiting, and the magnetization of the magnet could be in a different direction. However, the orientation of the magnetization direction is important to design the operation principle of the Hall sensors 17. It should be chosen such that when the lens module (where the magnet or the Hall sensor IC is located) moves, a changing magnetic field in the sensitive direction of the Hall sensors is present and sizeable. In some cases, such as for simple implementations where only the position in one direction needs to be determined, and therefore the strength of the signal is enough to determine the position, the field gradient is preferably linear, because it is simple. In other cases, such as in the first embodiment of the present invention, because the position in X-Y-Z directions is to be determined, more complex algorithms are required, and a linear field gradient is not required. In the first embodiment, the Z component of the magnetic field on the Hall sensor IC plane shows a nonlinear curve (this can be seen in Fig. 9); i.e. the magnetic field gradient changes with the distance, and more specifically becomes larger when the lens module 14 gets closer to the Hall sensor IC. In the first embodiment, the position of the Hall sensors may be chosen so that they are placed at the X and Y positions that are located in the slope of the curve, such as a sufficiently large magnetic field and sufficiently large gradient of the magnetic field is provided.

The orientation of the magnet with respect to the Hall sensors of the Hall sensor IC should be chosen such that sensor signals are maximized and the solution of the calculation results in an accurate position in all dimensions X, Y and Z. The orientations of the first embodiment - the at least three Hall sensors being Hall sensors with horizontal Hall plates and the magnet being magnetized in a direction perpendicular to a plane of the Hall sensor IC - is such that the gradient of a magnetic field component measured by the at least three Hall sensors is maximized in all X, Y and Z directions. For example, if the magnet is placed with the magnetization not in the Z direction, but in X direction, while the Hall sensor IC is still at the horizontal position (and comprising Hall sensors with horizontal Hall plates), the result of positioning may be good for Z and Y directions, but less accurate for X direction, because the magnetic field extends substantially along the X axis.

In a preferred embodiment, the magnet 18 has a cylindrical shape, where the rotational axis is in the direction of the magnetization of the magnet (in this case the Z direction). Alternatively, the magnet may have other shapes such as a cuboid. The distance between the lower edge of the magnet and the Hall sensor IC plane (where active silicone devices locate) may not be greater than 2millimetre (mm), or more preferably, not greater than 1 mm, or even more preferably, not greater than 0.5mm. The shorter the distance, the more accurate will be the measurements, because the stronger will be the detected magnetic field and the greater the field gradient. The maximum distance may be determined by the sensitivity of the Hall sensors.

The magnet 18 creates a magnetic field on the Hall sensor IC plane. In the first embodiment, the Hall sensor IC comprises Hall sensors with horizontal Hall plates, and therefore the perpendicular component of the magnetic field, $B_z$, is in the sensitive direction of the Hall sensors. It should however be evident for the skilled person that if Hall sensors with vertical Hall plates are used, a different component of the magnetic field would be of interest. A Hall sensor comprises Hall plates. The Hall plates are based on the Hall effect, which consists of the generation of a voltage difference (the Hall voltage) across an electrical conductor, as a result of deflection of electronic charges within the conductor when a magnetic field is applied perpendicular to the current. The most popular Hall sensors are based on horizontal Hall plates. In these horizontal Hall plates, the current flows in the in-plane direction and they are sensitive to a component of the magnetic field perpendicular to the silicon plane in which the Hall sensor is placed. Another type of Hall sensors are based on vertical Hall plates. In these vertical Hall plates, current flows essentially in the direction perpendicular to the silicon plate, and they are sensitive to the in-plane components of magnetic field.

Each Hall sensor usually consists of four or more Hall plates oriented at different directions for the so-called "current spinning technique". In the current spinning technique, the direction of the current is alternately rotated by switching terminals of the Hall plates to cancel out offset voltage, planar Hall effect, stress effect, and to reduce 1/f noise.

The Hall sensor IC 16 is constituted in a single silicon die or in an overmold packaged IC or chip. According to embodiments of the present invention, the Hall sensor IC 16 comprises at least three Hall sensors 17 configured to measure a magnetic field generated based on a position of the magnet 18. The Hall sensor IC may also comprise a control unit configured to determine a three dimensional position of the lens module (or lens, or lens barrel) based on a combination of the magnetic field values measured by the at least three Hall sensors. In some embodiments the control unit may however not be part of the Hall sensor IC but interact with the Hall sensor IC to control it. One single silicon die comprises at least three Hall sensors. Each of these Hall sensors is configured to measure a component of the magnetic field, and with the measured magnetic field of the at least three Hall sensors, the three dimensional position of the lens module can be determined.

Each of the Hall sensors 17 is placed at a different location within the Hall sensor IC 16 and they should not lie on a same straight line, as in such case a 3D determination of the position would not be possible. Each Hall sensor obtains a measurement of the magnetic field (more specifically of the component of the magnetic field to which the Hall sensor is sensitive). This magnetic field will vary depending on the relative position of the magnet 18 with respect to the Hall sensor IC, and since either the magnet 18 or the Hall sensor IC 16 is mounted on the lens module, by measuring the different magnetic fields, different positions of the lens module can be determined. In the art, Hall sensors are used to determine the position of the magnet (and therefore the lens) in one single direction, because one Hall sensor IC in the art includes only one Hall sensor. By having at least three Hall sensors in the Hall sensor IC, located at different locations in a non-aligned configuration, that is, not forming a straight line with each other, information from three different points can be obtained. That is to say, the distribution of the at least three Hall sensors can be understood as at least three points which are spaced apart from each other (and thus forming a plane instead of a straight line). In some embodiments, the at least three Hall sensors form a geometrical configuration with a central symmetry (such as a circle) or axial symmetry (such as a triangle, rectangle, pentagon, hexagon, or the like).

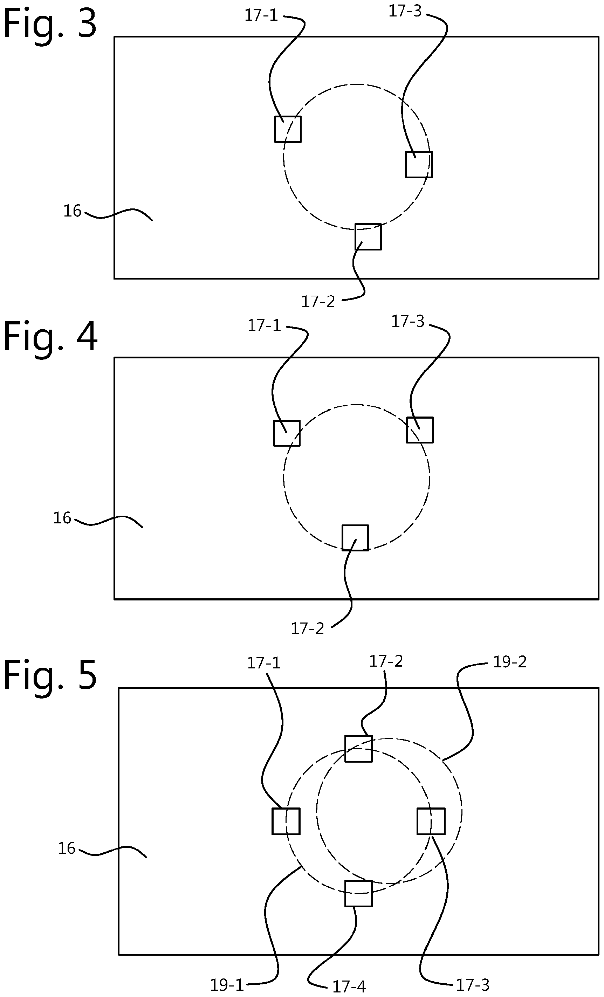

Fig. 3 depicts a schematic configuration of a Hall sensor IC for a camera system according to the first embodiment of the present invention. In one implementation of the first embodiment, the Hall sensor IC 16 comprises three Hall sensors (17-1, 17-2, 17-3) spaced apart from each other, and not forming any specific symmetric geometrical configuration.

Fig. 4 depicts another schematic configuration of a Hall sensor IC for a camera system according to the first embodiment of the present invention. In another implementation of the first embodiment, the Hall sensor IC 16 comprises three Hall sensors (17-1, 17-2, 17-3), in this configuration equally spaced apart from each other, and forming a circular configuration, or a triangular configuration. The Hall sensors should be placed in the Hall sensor IC as far apart from each other as possible to improve accuracy, but within an area having a sufficiently large absolute value of the magnetic field, and having a sufficiently large magnetic field gradient. A suitable way to achieve a maximum separation among all Hall sensors is to have them equally apart from each other.

Fig. 5 depicts another schematic configuration of a Hall sensor IC for a camera system according to the first embodiment of the present invention. In another implementation of the first embodiment, the Hall sensor IC 16 comprises four Hall sensors (17-1, 17-2, 17-3, 17-4), in this configuration equally spaced apart from each other, and forming a circular configuration, or a square configuration. Although three Hall sensors 17 measuring the magnetic field based on one magnet suffice to determine the position of the magnet 18 (and thus the lens module 14), the more Hall sensors are used, the more redundant information is generated which can in turn be used to improve the accuracy of the position determination. However, the more Hall sensors used, the more space is required, and the more operations need to be performed, resulting in a less compact and more complex system. A trade-off should therefore be achieved.

The center of the geometrical configuration formed by the Hall sensors may coincide or substantially coincide with the center of the projection of the magnet periphery onto the IC plane, when the lens is at the central position 19-1 (at rest position) (this is also applicable for the implementations of Fig. 3 and Fig. 4). The location angles of the Hall sensors on the circle are equally spaced, that is at 0, 45, 90, and 270°.

In order to determine the position of the lens 14 at a specific moment, Bz is measured by the Hall sensors in the Hall sensor IC 16. The values of Bz measured by each Hall sensor are then processed and combined in a specific way which allows to determine the 3D position of the lens. By using a combination of the signals (magnetic field component) detected by all the (at least three) Hall sensors, and a dedicated algorithm, a three dimensional (3D) position of the lens can be defined. With three known points (three Hall sensors) receiving signals (magnetic field) from a magnetic field source (magnet) whose position is to be determined, the three dimensional position of the magnetic field source can be determined. Through simulations, the possible magnetic fields measured by the Hall sensors at different X-Y-Z positions of the magnet can be characterized.

In general, a method for determining the position of the lens module 14 comprises: (i) measuring, by each of the least three Hall sensors 17 of the Hall sensor IC 16, a magnetic field generated based on a position of the magnet 18, and (ii) combining the magnetic field measured by each of the at least three Hall sensors 17 to determine a three dimensional, 3D, position of the magnet 18, wherein one of the Hall sensor IC and the magnet is arranged on a first inner side of a housing of the camera system, and the other one of the Hall sensor IC and the magnet is arranged on a first side of the lens module facing the first inner side of the housing.

A simple approach to determine the position of the magnet 18 based on the measured magnetic fields (components) is to previously calculate all the possible positions of the lens for all the possible magnetic fields (components) measurements of the Hall sensors, and to store in the memory of the Hall sensor IC 16 a look-up table in which the values of the magnetic field measured by the Hall sensors can be linked to the three dimensional (triaxial) position of the magnet. This approach is fast but requires a considerable amount of memory.

Another approach, which requires performing some optimization operations, but requires a lot less memory space, is to store in the memory the information in the form of parametric functions which have been previously determined by characterizing the magnetic field measurements of the at least three sensors for different positions. With these parameters, the position of the lens can be calculated based on the measured magnetic field components.

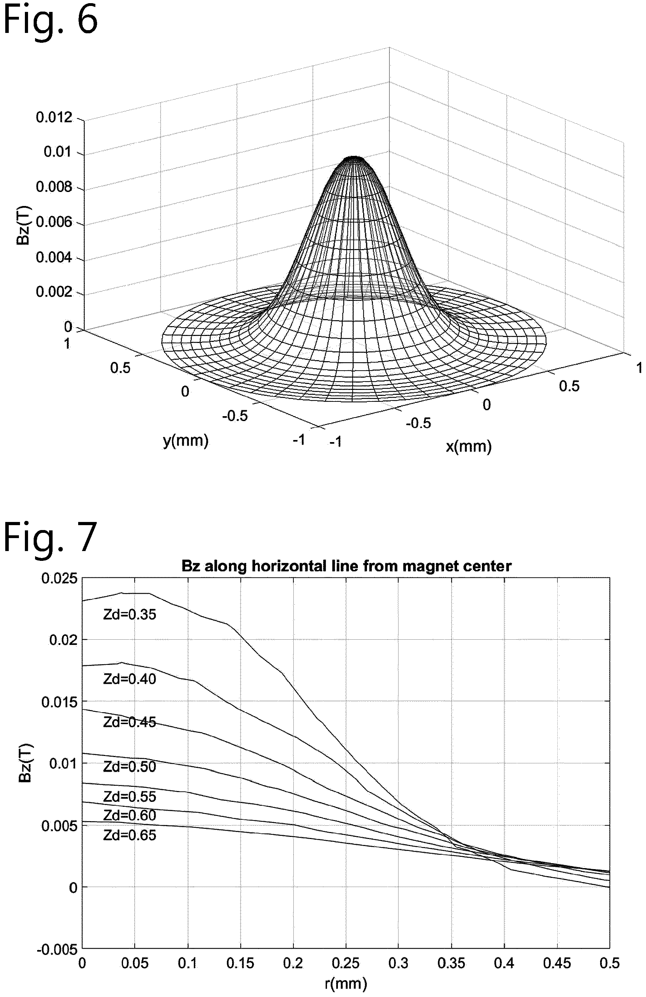

An example of the generation of parametric functions to link the measured magnetic field with the position of the magnet, applied to a configuration as described for the first embodiment, is shown in Figs. 6 to 9.

Fig. 6 shows a representation of the Z component of a magnetic field Bz on the X-Y plane where a Hall sensor IC 16 is located, for a specific distance between a magnet 18 and Hall sensor IC, calculated using a finite element simulation. In this simulation, a casted AlNiCo cylindrical magnet with a height of 0.4mm and diameter of 0.4mm, coercivity of 44.2kA/m, is assumed. The distance between the Hall sensor IC plane and the center of the magnet, Zd, is assumed to be 0.5mm.

By simulating what would be the Bz measured for all possible X and Y positions for a specific Z position Zd, a 3D function Bz=f(X,Y) can be obtained representing the possible values of Bz for the different X and Y positions. If a simulation is done for sufficient different Z positions (as seen in Fig. 7), a 3D function will be generated for each Z position. Therefore, when performing the position determination of the lens, once the Z position has been determined, the 3D function corresponding to the determined Z position is used to further determine the X and Y position.

In the example simulation shown in Figs. 6 and 7, Bz has a bell shape with rotational symmetry. The profile of the bell-shaped surface can be best described by a Gaussian function:

$$B_Z = ae^{-(r/c)^2}$$

For example, the profile at Zd=0.50mm, can be fitted to a Gaussian function having a=0.0197, c=0.3344, where r is in mm and Bz is in Tesla. A family of parameters for varied Zd over the AF stroke can be predetermined by characterization. As mentioned above, the parameters as functions of Zd can be stored in the memory of the Hall sensor IC 16 as a look-up table or parametric functions.

It should be noted that the bell-shape result of the simulation shown in Figs. 6 and 7 is merely one of many possibilities, and a different shape can be obtained if a different configuration of the Hall sensors is used, a different material for the magnet is used, a different shape, size, distance to the Hall sensor IC plane is used, or if any other relevant parameter is changed. It should thus be clear for the skilled person that other 3D functions or profiles could be obtained, which could be approximated by other mathematical functions different from the Gaussian function.

In order to detect the Z position of the magnet 18 (thus of the lens 14), the top of the bell-shape needs to be defined. Once knowing the Z position, a corresponding bell-shaped Bz surface can be determined. Further, to detect X-Y positions of the magnet, at least three Bz values on the corresponding bell-shaped surface need to be determined.

In the first embodiment, as shown in Fig. 3 to Fig. 5, when applying this example technique the radius of the geometrical shape that the Hall sensors form is preferably equal to the distance from the center to the middle of the slope of the Gaussian profiles, as such radius covers the most accurate detection range for the movement of the magnet, because it provides values for the absolute magnetic field large enough (larger than a predetermined threshold) and it provides a large enough gradient of the magnetic field (larger than a predetermined threshold). In the example depicted in Fig. 7, the radius is preferably about 0.18-0.22 mm.

Following the example of the first embodiment, the lens position determination can be done in several steps.

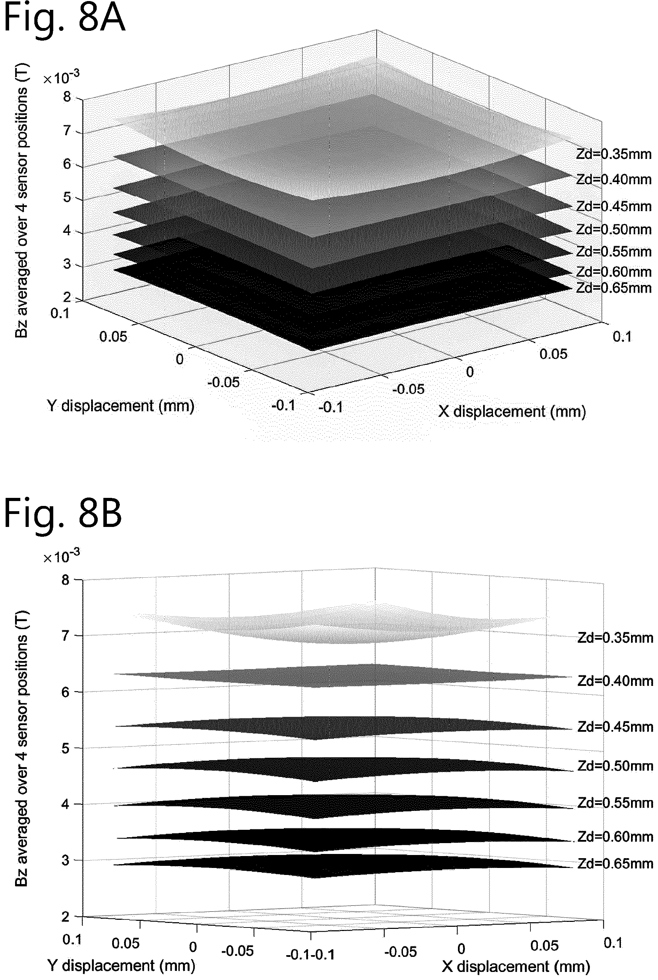

Step 1: the Z position of the magnet 18 can be deduced from the height of the top of the 3D function (the bell-shaped surface). Since the top of the bell-shaped surface is not known and cannot be determined directly, as a first step, the Z position can be estimated by taking the common-mode signal (sum or average of signals) of all the four Hall sensors (17-1, 17-2, 17-3, 17-4). The common-mode signal can then be compared with predefined information stored in the memory. Fig. 8 (A and B) shows the Bz averaged over the four sensors (common-mode signal) and calculated for different Z-positions (Zd). For each position Zd, the averaged Bz is calculated for all positions of the magnet (or lens) over the X-Y plane, forming a common-mode Bz surface. This calculation may be made during the design process and the results or information required to obtain the results is stored in the memory, so that when the common-mode signal is obtained from the Bz measured by the Hall sensors, the result of the measurement can be compared with the stored information and the Z position can be derived. Figs. 8A and 8B represent the same information from different perspectives. In general, the Bz surfaces at different Zd are quite flat and separated, which means that the common-mode signal can be used to estimate Zd, regardless of the magnet position in the X-Y plane. That is why the common-mode signal method is appropriate. However, it should be noted that other methods known to the skilled person could also be used. The estimate is based on calibrated characteristic of the Hall sensors. Simulations showed that the separation between Bz surfaces can be possible with minimum 6μm separation in Zd. That means that using the common-mode signal, the Z-position can be estimated with an accuracy of 6μm.

Step 2: once the Z position is known, a corresponding mathematical function that describes the 3D profile of a Bz surface can be identified using a look-up table or predefined parametric functions stored in the memory of the Hall sensor IC. In the first embodiment, the mathematical function corresponds to a Gaussian function, and the 3D profile corresponds to the bell-shaped surface. For each Bz surface, a combination of at least three points (signals of at least three Hall sensors) can determine its X-Y position. Fig. 9 (A and B show the same information from different perspectives) shows values of Bz at four sensors (marked as black dots) on the bell-shaped surface as the magnet is displaced 0.1mm and at angle 30 degrees from center in the polar coordinate system.

The X-Y position may be determined by applying a numerical method such as the nonlinear least square solver. The nonlinear least squares solver helps to solve this problem quite fast in the numerical way. It should however be noted that other methods could be used. It is based on the nonlinear data fitting algorithm. It basically searches over the entire X-Y space within a boundary condition (such as the maximum X-Y strokes of the lens barrel), starting from e.g. the central point (X=0; Y=0), for a point where the sum of all squares of differences between Bz calculated at this point and the measured Bz obtained from the sensor signals is minimum. The sum is taken over all sensor locations (in this case four locations). The equation below describes the solver in the mathematical way:

$$[\hat{r}, \hat{\theta}] = \arg\min \sum_{i=1}^{N} F_i^2$$

$$F_i = B_{Zi} - B_{Zmi}$$

where $[\hat{r}, \hat{\theta}]$ are the coordinates of the solution in polar coordinate system (i.e. the position of the lens); arg min is the argument of minima of the sum of $F_i^2$, where the sum $\Sigma$ is taken over all sensor positions i from 1 to N; $B_{Zi}$ is the value of Bz calculated for a pair of $[r,\theta]$ within the X-Y space to be searched, at position of sensor number i; $B_{Zmi}$ is the measured Bz at sensor number i. The solution in the polar coordinate system can then be converted back to the Cartesian coordinate system [X,Y] at the end.

In some embodiments, after finding the position of the lens in the X-Y plane, a step 3 may be performed in which the position in the Z direction is refined based on the known Bz surfaces shown in Fig. 8. Because at this point the X and Y positions are known, the more precise bell-shape function Bz=f(X,Y) (than in Step 1) can be determined, by checking the common-mode signal of Fig. 8. With the determined X and Y positions, a more precise Z position can be determined. The accuracy of the Z-position detection after this step may be well below 6 micrometers (μm), for instance, can be 3μm or smaller.

In some embodiments, after having a more precise Z position, a step 4 may be performed in which the step 2 can be repeated to obtain an even more precise X-Y position. In addition, step 3 and step 4 may be repeated for a number of times to further refine X, Y, and Z, until the obtained accuracy reaches a specific threshold. In some embodiments, after step 3 sufficient accuracy may already be achieved.

Although the example of the first embodiment shown above uses specific methods, it should be noted that other methods than the common-mode signal and/or the non-linear least squares solver could be used. For example, another method would be to use a machine learning technique to determine the 3D position of the magnet 18 based on the at least three Hall sensor readings. In this case the values of all X, Y and Z can be determined in one go. These readings serve as features, or inputs for the machine learning algorithm. Prior to being deployed in the application, the algorithm would need to be trained with all possible 3D positions. Examples of machine learning algorithms which may be used in this case to predict continuous values are decision trees, neural networks, K-nearest neighbors, or the like.

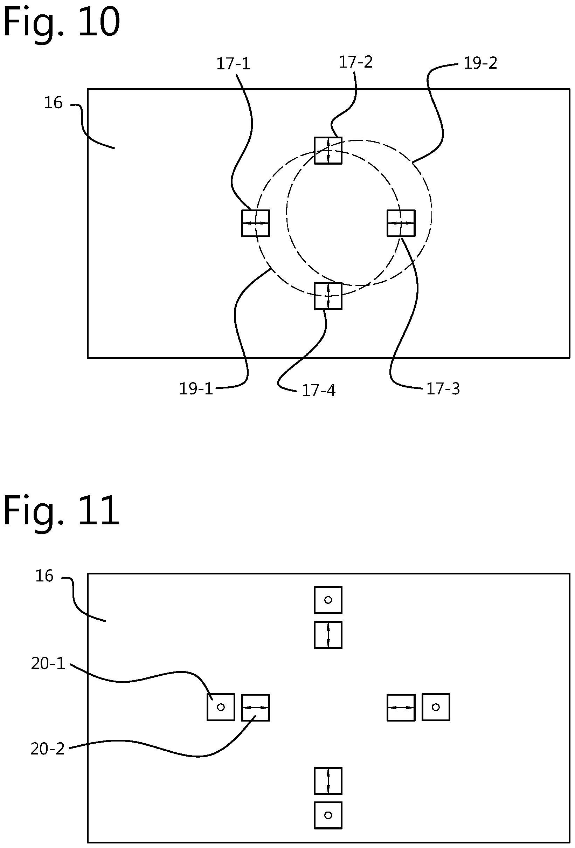

Fig. 10 depicts a schematic configuration of a Hall sensor IC for a camera system according to a second embodiment of the present invention.

The second embodiment is essentially identical to the first embodiment, and the description provided for the first embodiment applies for the most part in a similar way for the second embodiment. The second embodiment can also be implemented with at least three Hall sensors. The only difference is that in the second embodiment all the Hall sensors (17-1, 17-2, 17-3, 17-4) in the Hall sensor IC are Hall sensors with vertical Hall plates. The directions of sensitivity of the Hall sensors are in-plane and can be arranged radially as shown by double-head arrows in Fig. 10. Similarly to the first embodiment, Br, the in-plane component of the B field at each sensor location can be measured. Using values of Br of the sensors, the lens position in X, Y, Z can be obtained in a similar way as described for the first embodiment. It should be evident for the skilled person that because the measured magnetic field component is different from the first embodiment, a different 3D function shape may be obtained by simulation.

Fig. 11 depicts a schematic configuration of a Hall sensor IC for a camera system according to a third embodiment of the present invention. In this third embodiment, a combination of Hall sensors with horizontal and vertical Hall plates can be made on a single silicon IC or die. Reference number 20-1 in Fig. 11 refers to the direction of sensitivity being perpendicular to the IC plane (for horizontal Hall plates), and reference number 20-2 in Fig. 11 refers to the direction of sensitivity being parallel to the IC plane (for vertical Hall plates). In this case, Bz can be measured at the location of the horizontal Hall sensors, Br can be measured at the location of the vertical Hall sensors, and the results can be processed and combined to obtain the X, Y and Z position of the lens. For each Z position (Zd), if following the example of the first embodiment shown above, there is a bell-shaped function for the perpendicular component, and another (different)| function for the in-plane component. The Hall sensor IC of the third embodiment comprises two sets of sensors, each containing at least three Hall sensors, but preferably four Hall sensors. Each of the sets corresponds to each of the two functions. With this, the similar nonlinear least squared solver can be used to solve the X-Y-Z position. In this case the sum will have eight terms (N=8) instead of four. This is redundancy in the number of sensors, which could improve accuracy. Alternatively, other configurations can be used where there are at least three sensors. The sensors can be a mixture of horizontal and vertical Hall sensors, such as one horizontal and two vertical, or two horizontal and one vertical.

According to embodiments of the present invention, a camera system may comprise at least three Hall sensors in the Hall sensor IC as explained before. The Hall sensors may be configured to be enabled and disabled, that is, switched on/off, by the controlling unit depending on system specifications, and the algorithm residing in the firmware of the system can also be switched accordingly.

In this way, for example, only one Hall sensor could be enabled or switched on so as to be used to determine the position of the lens in the Z direction only, whereas the other sensors are switched off to save power. For another example, two Hall sensors could be enabled instead of one, to determine the lens position in the Z direction. Depending on which Hall sensor(s) are enabled and the purpose of their enablement (the position that is to be determined, X, Y or Z), it may be desirable to change the orientation of the magnet in order to obtain a different magnetization direction. For example, two of the at least three Hall sensors may be enabled to determine the lens position in the Z direction. The two Hall sensors may be in a differential configuration. The remaining Hall sensors may be switched off. For determining the Z position, it is preferable that the magnet is arranged such that its magnetization is perpendicular to the Hall sensor IC plane. By using the two Hall sensors in a differential configuration, unwanted external magnetic fields do not affect the measured magnetic signals and therefore do not affect the position determination of the lens module. The control unit, either being a part of the Hall sensor IC or being a separate element of the camera system interacting with the Hall sensor IC, may control which Hall sensors are enabled and disabled.

The invention may also comprise a camera system comprising a plurality of Hall sensor ICs 16, each comprising at least three Hall sensors 17. This allows to perform measurements in different directions with different ICs and therefore decouple the detection of for example Z and X-Y, thereby making the detection more accurate and faster.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

**List of reference symbols**

Similar reference numbers that have been used in the description to indicate similar elements have been omitted from the list below, but should be considered implicitly included.

10    Camera system
12    Housing
13    Image sensor
14    Lens module
16    Hall sensor IC
17    Hall sensor (17-1, 17-2...)
18    Magnet
19    Projection of magnet periphery on circuit board (19-1, 19-2)
20    Direction of sensitivity (20-1, 20-2)(perpendicular or parallel to plane)

**Claims**

1. A Hall sensor integrated circuit, IC, (16) for a camera system (10), the Hall sensor IC comprising:

      at least three Hall sensors (17) spaced apart from each other in a non-aligned configuration, and configured to measure a magnetic field generated by one magnet (18) at a position of the one magnet arranged in the camera system, wherein the one magnet (18) is arranged inside a housing and facing the Hall sensor IC, and wherein

one of the Hall sensor IC (16) and the one magnet (18) is arranged on a first inner side of the housing (12) and the other one of the Hall sensor IC (16) and the one magnet (18) is arranged on a first side of a lens module (14) facing the first inner side of the housing;

a control unit configured to control Hall sensor IC (16) to determine the position of the one magnet (18) based on a combination of the magnetic fields measured by the at least three Hall sensors (17) at each position of the at least three Hall sensors (17),

wherein the combination is based on each position of the at least three Hall sensor (17); and

a memory in communication with Hall sensor IC (16) configured to store information required to obtain the position of the one magnet (18), wherein the control unit determines the position of the one magnet based on the combination of the magnetic fields measured by the at least three Hall sensors (17),

wherein a distance between an edge of the one magnet (18) closest to the Hall sensor IC (16) and the Hall sensor IC is not greater than 2 millimetres.

2. The Hall sensor IC (16) according to claim 1, wherein the at least three Hall sensors (17) are arranged within the Hall sensor IC forming a geometrical configuration with respect to each other with central symmetry or axial symmetry.

3. The Hall sensor IC (16) according to any one of claims 1 - 2 wherein the at least three Hall sensors (17) are equally spaced from each other.

4. The Hall sensor IC (16) according to any one of claims 1 - 3, wherein each of the at least three Hall sensors (17) is configured to be individually enabled and disabled.

5. The Hall sensor IC (16) according to any one of claims 1 - 4, comprising four Hall sensors (17) arranged within the Hall sensor IC forming a circular configuration or a squared configuration.

6. The Hall sensor IC (16) according to claim 5, wherein a radius of a geometrical shape formed by the four Hall sensors (17) is equal to a distance from a center fo the geometrical shape to a middle of a slope of a Gaussian profile of the magnetic field of the one magnet (18).

7. The Hall sensor IC (16) according to any one of claims 1 - 6, being configured to be integrated in another IC comprised in the camera system (10), the another IC being one of a list comprising: a lens driver, a motor controller, an image sensor, an image sensor controller, an image processor, or any other IC present in the camera system.

8. A camera system (10) comprising:

a housing (12);
a lens module (14) arranged inside the housing;
a Hall sensor IC (16) according to any one of claims 1 - 6 and arranged inside the housing; and
a magnet (18) arranged inside the housing and facing the Hall sensor IC,
wherein one of the Hall sensor IC (16) and the one magnet (18) is arranged on a first inner side of the housing (12) and the other one of the Hall sensor IC (16) and the one magnet (18) is arranged on a first side of the lens module (14) facing the first inner side of the housing.

9. The camera system according to claim 8, wherein a distance between an edge of the one magnet (18) closest to the Hall sensor IC (16) and the Hall sensor IC is not greater than 1 millimetre, and more preferably not greater than 0.5 millimetres.

10. The camera system according to claim 8 or 9, wherein the at least three Hall sensors (17) of the Hall sensor IC are all Hall sensors with horizontal Hall plates and the one magnet (18) is magnetized in a direction perpendicular to a plane of the Hall sensor IC.

11. A method for determining a position of a lens module (14) arranged inside a camera system (12), comprising:

- measuring, by each of the at least three Hall sensors (17) of the Hall sensor IC (16) according to any one of claims 1 - 7, a magnetic field generated by one magnet at a position of the one magnet (18) arranged inside the camera system, and
- combining the magnetic field measured by each of the at least three Hall sensors (17) to determine the position of the one magnet (18),

wherein one of the Hall sensor IC (16) and the one magnet (18) is arranged on a first inner side of a housing (12) of the camera system, and the other one of the Hall sensor IC (16) and the one magnet (18) is arranged on a first side of the lens module (14) facing the first inner side of the housing, wherein to determine the position of the one magnet (18), the method comprises comparing the combined measured magnetic field with a predefined information stored in a look-up table, wherein a distance between an edge of the one magnet (18) closest to the Hall sensor IC (16) and the Hall sensor IC is not greater than 2 millimetres.

12. The method according to claim 11, wherein the position of the one magnet is a three dimensional, 3D, position, and to determine the 3D position of the one magnet (18), the method comprises using predefined information stored in the form of at least one parametric function for transforming a plurality of magnetic fields measured by the at least three Hall sensors into the 3D position of the one magnet (18).

**Patentansprüche**

1. Hallsensor-integrierter-Schaltkreis, IC, (16) für ein Kamerasystem (10), wobei der Hallsensor-IC folgendes umfasst:

   mindestens drei Hallsensoren (17), die in einer nicht ausgerichteten Konfiguration voneinander beabstandet sind, und eingerichtet sind, um ein durch einen Magneten (18) an einer Position des einen in dem Kamerasystem angeordneten Magneten erzeugtes Magnetfeld zu messen, wobei der eine Magnet (18) innerhalb eines Gehäuses angeordnet ist und dem Hallsensor-IC gegenüberliegt, und wobei einer des Hallsensor-ICs (16) und des einen Magneten (18) an einer ersten inneren Seite des Gehäuses (12) angeordnet ist und der Andere des Hallsensor-ICs (16) und des einen Magneten (18) an einer ersten Seite eines Objektivmoduls (14) angeordnet ist, das der ersten inneren Seite des Gehäuses gegenüberliegt;
   eine Steuereinheit, die eingerichtet ist, um den Hallsensor-IC (16) zu steuern, um die Position des einen Magneten (18) auf der Grundlage einer Kombination der durch die mindestens drei Hallsensoren (17) gemessenen Magnetfelder an jeder Position der mindestens drei Hallsensoren (17) zu bestimmen, wobei die Kombination auf jeder Position der mindestens drei Hallsensoren (17) basiert; und
   einen Speicher in Kommunikation mit dem Hallsensor-IC (16), eingerichtet, um erforderliche Informationen zum Erhalten der Position des einen Magneten (18) zu speichern, wobei die Steuereinheit die Position des einen Magneten (18) auf der Grundlage der Kombination der durch die mindestens drei Hallsensoren (17) gemessenen Magnetfelder bestimmt;
   wobei eine Entfernung zwischen einer Kante des einen Magneten (18) am nächsten zu dem Hallsensor-IC (16) und dem Hallsensor-IC nicht größer als 2 Millimeter ist.

2. Hallsensor-IC (16) nach Anspruch 1, wobei die mindestens drei Hallsensoren (17) innerhalb des Hallsensor-ICs angeordnet sind und im Verhältnis zueinander eine geometrische Konfiguration mit Punktsymmetrie oder Achsensymmetrie bilden.

3. Hallsensor-IC (16) nach einem der Ansprüche 1 oder 2, wobei die mindestens drei Hallsensoren (17) gleich weit voneinander beabstandet sind.

4. Hallsensor-IC (16) nach einem der Ansprüche 1 bis 3, wobei jeder der mindestens drei Hallsensoren (17) eingerichtet ist, um individuell aktiviert und deaktiviert zu werden.

5. Hallsensor-IC (16) nach einem der Ansprüche 1 bis 4, mit vier Hallsensoren (17), die innerhalb des Hallsensor-ICs angeordnet sind, um eine kreisförmige Konfiguration oder eine quadratische Konfiguration zu bilden.

6. Hallsensor-IC (16) nach Anspruch 5, wobei ein Radius einer durch die vier Hallsensoren (17) gebildeten geometrischen Form gleich einer Entfernung von einem Zentrum der geometrischen Form zu einer Mitte einer Neigung eines gausschen Profils des magnetischen Feldes des einem Magneten (18) ist.

7. Hallsensor-IC (16) nach einem der Ansprüche 1 bis 6, eingerichtet, um in einen anderen IC integriert zu sein, der in dem Kamerasystem (10) umfasst ist, wobei der andere IC eines aus einer Liste ist, die Folgendes umfasst: ein Objektivtreiber, eine Motorsteuerung, ein Bildsensor, eine Bildsensorsteuerung, ein Bild-Prozessor, oder jeder andere IC, der in dem Kamerasystem vorhanden ist.

8. Kamerasystem (10), mit:

   einem Gehäuse (12);
   einem innerhalb des Gehäuses angeordnetem Objektivmodul (14);
   einem Hallsensor-IC (16) nach einem der Ansprüche 1 bis 6 und innerhalb des Gehäuses angeordnet; und
   einem Magneten (18) innerhalb des Gehäuses und dem Hallsensor-IC gegenüberliegend, wobei einer des Hallsensor-ICs (16) und des einen Magneten (18) an einer ersten inneren Seite des Gehäuses (12) angeordnet ist und der Andere des Hallsensor-ICs (16) und des einen Magneten (18) an einer ersten Seite des Objektivmoduls (14) angeordnet ist, das der ersten inneren Seite des Gehäuses gegenüberliegt.

9. Kamerasystem nach Anspruch 8, wobei eine Entfernung zwischen einer Kante des einen Magneten (18) am nächsten zu dem Hallsensor-IC (16) und dem Hallsensor-IC nicht größer als ein Millimeter ist, und noch bevorzugter nicht größer als 0,5 Millimeter ist.

10. Kamerasystem nach Anspruch 8 oder 9, wobei die mindestens drei Hallsensoren (17) des Hallsensor-ICs alles Hallsensoren mit horizontalen Hallplatten sind und der eine Magnet (18) in einer Richtung senkrecht zu einer Ebene des Hallsensor-ICs magnetisiert ist.

11. Verfahren zum Bestimmen einer Position eines Objektivmoduls (14), das innerhalb eines Kamerasystems (12) angeordnet ist, mit:

    - Messen, durch jeden der mindestens drei Hallsensoren (17) des Hallsensor-ICs (16) nach einem der Ansprüche 1 bis 7, eines durch einen Magneten (18) an einer Position des einen innerhalb des Kamerasystems angeordneten Magneten erzeugten Magnetfeldes, und
    - Kombinieren des von jedem der mindestens drei Hallsensoren (17) gemessenen Magnetfeldes, um die Position des einen Magneten (18) zu messen, wobei einer des Hallsensor-ICs (16) und des einen Magneten (18) an einer ersten inneren Seite des Gehäuses (12) angeordnet ist und der Andere des Hallsensor-ICs (16) und des einen Magneten (18) an einer ersten Seite eines Objektivmoduls (14) angeordnet ist, das der ersten inneren Seite des Gehäuses gegenüberliegt, wobei zum Bestimmen der Position des einen Magneten (18) das Verfahren umfasst, das kombinierte gemessene Magnetfeld mit in einer Look-up Tabelle gespeicherten vordefinierten Informationen zu vergleichen, wobei eine Entfernung zwischen einer Kante des einen Magneten (18) am nächsten zu dem Hallsensor-IC (16) und dem Hallsensor-IC nicht größer als 2 Millimeter ist.

12. Verfahren nach Anspruch 11, wobei die Position des einen Magneten eine drei dimensionale, 3D, Position ist, und um die 3D Position des einen Magneten (18) zu bestimmen das Verfahren umfasst, vordefinierte Informationen zu verwenden, die in der Form von mindestens einer parametrischen Funktion zum Umwandeln einer Mehrzahl von den mindestens drei Hallsensoren gemessenen Magnetfelder in die 3D Position des einen Magneten (18) gespeichert sind.

**Revendications**

1. - Circuit intégré (CI) à capteurs à effet Hall (16) pour un système de caméra (10), le CI à capteurs à effet Hall comprenant :

    au moins trois capteurs à effet Hall (17) espacés les uns des autres dans une configuration non alignée, et configurés pour mesurer un champ magnétique généré par un aimant (18) à une position de l'aimant disposé dans le système de caméra, l'aimant (18) étant disposé à l'intérieur d'un boîtier et faisant face au CI à capteurs à effet Hall, et l'un du CI à capteurs à effet Hall (16) et de l'aimant (18) étant disposé sur un premier côté intérieur du boîtier (12) et l'autre du CI à capteurs à effet Hall (16) et de l'aimant (18) étant disposé sur un premier côté d'un module d'objectif (14) faisant face au premier côté intérieur du boîtier ;
    une unité de commande configurée pour commander le CI à capteurs à effet Hall (16) afin de déterminer la position de l'aimant (18) sur la base d'une combinaison des champs magnétiques mesurés par les au moins trois capteurs à effet Hall (17) à chaque position des au moins trois capteurs à effet Hall (17), la combinaison étant basée sur chaque position des au moins trois capteurs à effet Hall (17) ; et
    une mémoire en communication avec le CI à capteurs à effet Hall (16) configurée pour stocker des informations nécessaires pour obtenir la position de l'aimant (18), l'unité de commande déterminant la position de l'aimant sur la base de la combinaison des champs magnétiques mesurés par les au moins trois capteurs à effet Hall (17),
    une distance entre un bord de l'aimant (18) le plus proche du CI à capteurs à effet Hall (16) et le CI à capteurs à effet Hall n'est pas supérieure à 2 millimètres.

2. - Circuit intégré à capteurs à effet Hall (16) selon la revendication 1, dans lequel les au moins trois capteurs à effet Hall (17) sont disposés à l'intérieur du CI à capteurs à effet Hall en formant une configuration géométrique les uns par rapport aux autres avec une symétrie centrale ou une symétrie axiale.

3. - Circuit intégré à capteurs à effet Hall (16) selon l'une quelconque des revendications 1 et 2, dans lequel les au moins trois capteurs à effet Hall (17) sont espacés les uns des autres de manière égale.

4. - Circuit intégré à capteurs à effet Hall (16) selon l'une quelconque des revendications 1 à 3, dans lequel chacun des au moins trois capteurs à effet Hall (17) est configuré pour être activé et désactivé individuellement.

5. - Circuit intégré à capteurs à effet Hall (16) selon l'une quelconque des revendications 1 à 4, comprenant quatre capteurs à effet Hall (17) disposés à l'intérieur du CI à capteurs à effet Hall en formant une configuration circulaire ou une configuration carrée.

6. - Circuit intégré à capteurs à effet Hall (16) selon la revendication 5, dans lequel un rayon d'une forme géométrique formée par les quatre capteurs à effet Hall (17) est égal à une distance d'un centre de la forme géométrique à un milieu d'une pente d'un profil gaussien du champ magnétique de l'aimant (18).

7. - Circuit intégré à capteurs à effet Hall (16) selon l'une quelconque des revendications 1 à 6, configuré pour être intégré dans un autre circuit intégré (CI) compris dans le système de caméra (10), l'autre CI faisant partie d'une liste comprenant : un porte-objectif, un contrôleur de moteur, un capteur d'image, un contrôleur de capteur d'image, un processeur d'image, ou tout autre CI présent dans le système de caméra.

8. - Système de caméra (10) comprenant :

   un boîtier (12) ;
   un module d'objectif (14) disposé à l'intérieur du boîtier ;
   un circuit intégré (CI) à capteurs à effet Hall (16) selon l'une quelconque des revendications 1 à 6 et disposé à l'intérieur du boîtier ; et
   un aimant (18) disposé à l'intérieur du boîtier et faisant face au CI à capteurs à effet Hall,
   l'un du CI à capteurs à effet Hall (16) et de l'aimant (18) étant disposé sur un premier côté intérieur du boîtier (12) et l'autre du CI à capteurs à effet Hall (16) et de l'aimant (18) étant disposé sur un premier côté du module d'objectif (14) faisant face au premier côté intérieur du boîtier.

9. - Système de caméra selon la revendication 8, dans lequel une distance entre un bord de l'aimant (18) le plus proche du CI à capteurs à effet Hall (16) et le CI à capteurs à effet Hall n'est pas supérieure à 1 millimètre, et de préférence pas supérieure à 0,5 millimètre.

10. - Système de caméra selon la revendication 8 ou 9, dans lequel les au moins trois capteurs à effet Hall (17) du CI à capteurs à effet Hall sont tous des capteurs à effet Hall avec des plaques à effet Hall horizontales, et l'aimant (18) est magnétisé dans une direction perpendiculaire à un plan du CI à capteurs à effet Hall.

11. - Procédé pour déterminer une position d'un module d'objectif (14) disposé à l'intérieur d'un système de caméra (12), comprenant :

   - mesurer, par chacun des au moins trois capteurs à effet Hall (17) du CI à capteurs à effet Hall (16) selon l'une quelconque des revendications 1 à 7, un champ magnétique généré par un aimant à une position de l'aimant (18) disposé à l'intérieur du système de caméra, et
   - combiner le champ magnétique mesuré par chacun des au moins trois capteurs à effet Hall (17) pour déterminer la position de l'aimant (18),

l'un du CI à capteurs à effet Hall (16) et de l'aimant (18) étant disposé sur un premier côté intérieur d'un boîtier (12) du système de caméra et l'autre du CI à capteurs à effet Hall (16) et de l'aimant (18) étant disposé sur un premier côté du module d'objectif (14) faisant face au premier côté intérieur du boîtier, pour déterminer la position de l'aimant (18) le procédé comprenant comparer à des informations prédéfinies stockées dans une table de recherche le champ magnétique mesuré combiné, une distance entre un bord de l'aimant (18) le plus proche du CI à capteurs à effet Hall (16) et le CI à capteurs à effet Hall n'étant pas supérieure à 2 millimètres.

12. - Procédé selon la revendication 11, dans lequel la position de l'aimant est une position tridimensionnelle (3D) et, pour déterminer la position 3D de l'aimant (18), le procédé comprend utiliser des informations prédéfinies stockées sous la forme d'au moins une fonction paramétrique pour transformer une pluralité de champs magnétiques mesurés par les au moins trois capteurs à effet Hall en la position 3D de l'aimant (18).

# Fig. 1
(Prior art)

# Fig. 2

Fig. 3

17-1    17-3

16

17-2

Fig. 4

17-1    17-3

16

17-2

Fig. 5

17-1    17-2    19-2

16

19-1    17-4    17-3

## Fig. 6

## Fig. 7

Bz along horizontal line from magnet center

Fig. 8A

Fig. 8B

# Fig. 9A

# Fig. 9B

# Fig. 10

# Fig. 11

**EP 3 964 800 B1**

**REFERENCES CITED IN THE DESCRIPTION**

**Patent documents cited in the description**

- US 20150015729 A1
- JP 6513903 B
- US 20150195439 A1
- US 9523744 B2
- DE 102016108846 A1
- WO 2019159311 A1
- US 20190162557 A1
- US 20190250222 A1